# EUROPÄISCHE PATENTANMELDUNG

(11) **EP 0 676 406 A2**
(43) Veröffentlichungstag der Anmeldung: **11.10.1995**
(21) Anmeldenummer: 95103445.3
(22) Anmeldetag: 10.03.1995
(51) Int. Cl.: C07F 9/40

(54) **Verfahren zur Herstellung von Thiocarbonylmethanphosphonsäurediestern**

(30) Priorität: 11.04.1994 DE 4412347
(71) Anmelder: HOECHST AKTIENGESELLSCHAFT, D-65926 Frankfurt am Main (DE)
(72) Erfinder: Weferling, Norbert, Dr., D-50354 Hürth-Efferen (DE); Kleiner, Hans-Jerg, Dr., D-61476 Kronberg (DE)

(57) **Zusammenfassung**

Zur Herstellung von Thiocarbonylmethanphosphonsäurediestern der allgemeinen Formel (I) 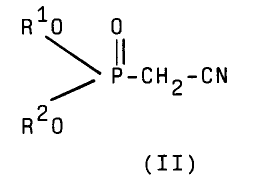
worin R¹ und R² für eine Alkylgruppe mit 1 bis 8 Kohlenstoffatomen stehen, wobei R¹ und R² gleich oder verschieden sein oder gemeinsam einen Ring bilden können, setzt man Cyanmethan-phosphonsäurediester der allgemeinen Formel (II) 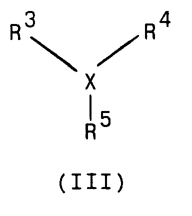
worin R¹ und R² die obengenannte Bedeutung haben, mit Schwefelwasserstoff bei Temperaturen von 0 bis 130 °C in Gegenwart von 0,5 bis 5 Mol je Mol der Verbindung gemäß der allgemeinen Formel (II) eines tertiären Amins nach der allgemeinen Formel (III) 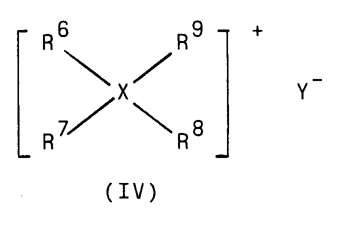
worin R³, R⁴ und R⁵ für jeweils gleiche oder verschiedene geradkettige oder verzweigte Alkylgruppen mit 1 bis 4 Kohlenstoffatomen stehen, wobei R³, R⁴ und R⁵ zusammen mindestens 5 und höchstens 10 Kohlenstoffatome aufweisen, um.

## Beschreibung

Die vorliegende Erfindung betrifft ein Verfahren zur Herstellung von Thiocarbonylmethanphosphonsäurediestern der allgemeinen Formel (I) 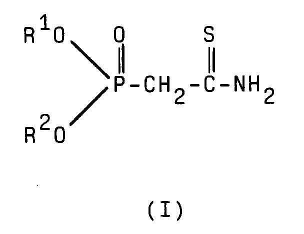
worin R¹ und R² für eine Alkylgruppe mit 1 bis 8, vorzugsweise 1 bis 4 Kohlenstoffatomen stehen, wobei R¹ und R² gleich oder verschieden sein oder gemeinsam einen Ring bilden können.

Aus der SU-PS 1 583 425 ist ein Verfahren zur Herstellung von thioamidosubstituierten Phosphonaten der allgemeinen Formel 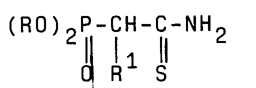
worin R für den Ethyl- oder Isopropylrest und R¹ für Wasserstoff oder -CH₂C(O)OC₂H₅ stehen, bekannt. Danach setzt man Dialkyl(cyanmethyl)phosphonate mit Schwefelwasserstoff in einem aus Triethylamin und Pyridin im Volumenverhältnis von 1 : 1 bestehenden Lösungsmittel bei Raumtemperatur um. Das Zielprodukt kristallisiert aus dem Reaktionsgemisch nach seiner Abkühlung auf 0 °C im Laufe von 12 Stunden aus.

Nachteilig sind bei dem bekannten Verfahren schwankende Ausbeuten und die erforderliche Wiedergewinnung des Lösungsmittels sowie der notwendige erhebliche Überschuß an Schwefelwasserstoff.

Es ist daher Aufgabe der vorliegenden Erfindung, ein Verfahren zur Herstellung von Thiocarbonylmethanphonsäurediestern anzugeben, welches lösungsmittelfrei ablaufen kann und bei welchem nur ein geringfügiger Schwefelwasserstoff-Überschuß erforderlich ist. Das wird erfindungsgemäß dadurch erreicht, daß man Cyanmethanphosphonsäurediester der allgemeinen Formel (II) 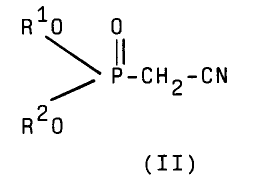
worin R¹ und R² die obengenannte Bedeutung haben, mit Schwefelwasserstoff bei Temperaturen von 0 bis 130 °C in Gegenwart von 0,5 bis 5 Mol je Mol der Verbindung gemäß der allgemeinen Formel (II) eines tertiären Amins nach der allgemeinen Formel (III) 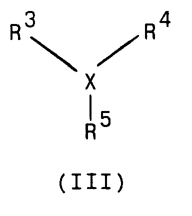
worin R³, R⁴ und R⁵ für jeweils gleiche oder verschiedene geradkettige oder verzweigte Alkylgruppen mit 1 bis 4 Kohlenstoffatomen stehen, wobei R³, R⁴ und R⁵ zusammen mindestens 5 und höchstens 10 Kohlenstoffatome aufweisen, umsetzt.

Das Verfahren gemäß der Erfindung kann weiterhin wahlweise auch noch dadurch ausgestaltet sein, daß
a) man als zusätzlichen Katalysator eine Verbindung der allgemeinen Formel (IV) 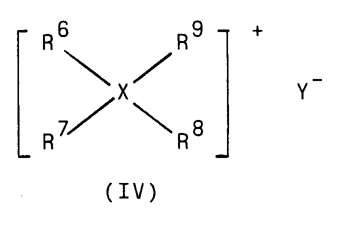 worin R⁶, R⁷, R⁸ und R⁹ für jeweils eine gleiche oder verschiedene Alkyl-, Benzyl- oder Aralkylgruppe mit 1 bis 20 Kohlenstoffatomen stehen und worin X ein Stickstoff- oder Phosphoratom und Y ein Halogenid ist, verwendet;
b) die Umsetzung bei Temperaturen von 10 bis 40 °C erfolgt;
c) Cyanomethanphosphonsäurediester und Schwefelwasserstoff im Molverhältnis 1 : (1 bis 2), vorzugsweise 1 : (1,1 bis 1,5) umgesetzt werden.

Beim erfindungsgemäßen Verfahren können als Ausgangsstoffe Dimethylester, Diethylester, Diisopropylester, Dicyclohexylester oder Monomethylmonobutylester der Cyanomethanphosphonsäure verwendet werden.

Beim Verfahren gemäß der Erfindung sind als tertiäre aliphatische Amine Triethylamin, Tri-n-propylamin, Diisopropylmethylamin oder Diisopropylethylamin sowie quartäre Phosphoniumsalze wie Tetrabutylphosphoniumbromid besonders geeignet.

Das erfindungsgemäße Verfahren kann prinzipiell ohne Verwendung von Lösungsmitteln durchgeführt werden. Wenn dennoch ein Lösungsmittel verwendet wird, empfehlen sich Toluol, Xylol oder Hexan.

Die tertiären Amine gemäß der allgemeinen Formel (III) lösen sich in den Cyanomethanphosphonsäurediestern gemäß der allgemeinen Formel (II) in der Regel nur sehr wenig. Deshalb ist es beim erfindungsgemäßen Verfahren erforderlich, daß man in das Gemenge aus tertiärem Amin und Ester unter kräftigem Rühren bei lebhafter Verwirbelung solange Schwefelwasserstoff einleitet, bis dieser nicht mehr aufgenommen wird.

Das Verfahren gemäß der Erfindung wird in der Regel unter Normaldruck durchgeführt; es kann aber auch unter erhöhtem Druck ausgeführt werden.

Es ist ein Vorzug des erfindungsgemäßen Verfahrens, daß sich nach beendeter Umsetzung in der Regel zwei Schichten ausbilden, wobei die obere Schicht aus dem eingesetzten, gegebenenfalls mit einem Lösungsmittel verdünnten Amin besteht, während die untere Schicht nach ihrer Befreiung von anhaftendem Schwefelwasserstoff und Leichtsiedern das rohe Zielprodukt darstellt. Während das Amin aus der oberen Schicht ohne weitere Aufarbeitung wieder eingesetzt werden kann, erfolgt die Reinigung des rohen Zielproduktes durch Schmelzkristallisation und Digerieren mit einem Lösungsmittel.

Werden beim erfindungsgemäßen Verfahren zusätzliche Katalysatoren gemäß der allgemeinen Formel (IV) eingesetzt, so kristallisiert nach Beendigung der Einleitung von etwa stöchiometrischen Mengen Schwefelwasserstoff das Produkt in hoher Reinheit aus dem Reaktionsgemisch aus.

Die mit dem Verfahren gemäß der Erfindung erhältlichen Thiocarbonylphosphonsäurediester sind als Zwischenprodukte, beispielsweise für die Horner'sche Phosphonat-Reaktion von Bedeutung.

### Beispiel 1

Ein lebhaft gerührtes Gemisch aus 42,4 g (0,24 Mol) Cyanomethanphosphonsäurediethylester und 48,6 g (0,48 Mol) Triethylamin wurde mit Schwefelwasserstoff begast, wobei die Temperatur auf 40 °C anstieg. Bei dieser Temperatur wurde weiter solange Schwefelwasserstoff eingeleitet, bis er nicht mehr aufgenommen wurde. Das Reaktionsgemisch bestand aus zwei Schichten, wovon die untere Schicht abgetrennt und solange bei 20 mbar bis zu einer Innentemperatur von 80 °C erwärmt wurde, bis Gewichtskonstanz eintrat. Die nach Abkühlen erhaltene 47,5 g kristalline Masse wurde aus Toluol umkristallisiert. Es wurden 37 g Thiocarbamoylmethanphosphonsäurediethylester mit einem Schmelzpunkt von 69 bis 71 °C und einer Produktreinheit gemäß ³¹P-NMR-Spektrum von 96 % erhalten. Die Ausbeute betrug 73 % der Theorie.

### Beispiel 2

In ein lebhaft gerührtes Gemisch aus 50 g (0,28 Mol) Cyanomethanphosphonsäurediethylester und 73 g (0,57 Mol) Di-isopropylethylamin wurde unter Kühlung auf 20 bis 25 °C Schwefelwasserstoff eingegast. Unter Einhaltung einer Temperatur von 20 °C wurde weiter solange Schwefelwasserstoff eingeleitet, bis er nicht mehr aufgenommen wurde. Nach etwa 4 bis 5 Stunden wurde das Reaktionsgemisch in zwei Schichten getrennt. Die untere Schicht verfestigte sich zu einer kristallinen Masse, welche mit Ethylacetat digeriert wurde. Es wurden 38 g Thiocarbamoylmethanphosphonsäurediethylester mit einem Schmelzpunkt von 69 bis 71 °C erhalten, was einer Ausbeute von 64 % der Theorie entspricht. Aus der Mutterlauge wurden weitere 8 g Produkt gewonnen.

### Beispiel 3

Eine Suspension von 66 g (0,37 Mol) Cyanomethanphosphonsäurediethylester, 75 g Triethylamin (0,74 Mol) und 1 g Tetrabutylphosphoniumbromid in 70 g Toluol wurde auf 10 °C abgekühlt. Unter Rühren wurde soviel Schwefelwasserstoff in die Suspension eingeleitet, wie unverzüglich verbraucht wurde, wobei die Reaktionstemperatur trotz Kühlung auf 16 °C anstieg. Nach 5 Stunden fiel aus dem erst grünlichen, später gelben Reaktionsgemisch Thiocarbamoylmethanphosphonsäurediethylester als farbloser Feststoff aus, welcher nach Abfiltrieren unter Luftabschluß mit Toluol gewaschen und im Vakuum getrocknet wurde. Es wurden 70 g Thiocarbamoylphosphonsäuremethandiethylester mit einem Schmelzpunkt von 68 bis 71 °C und einer Produktreinheit gemäß ³¹P-NMR-Spektrum von 98 % erhalten. Die Ausbeute betrug 90 % der Theorie.

## Patentansprüche

1. Verfahren zur Herstellung von Thiocarbonylmethanphosphonsäurediestern der allgemeinen Formel (I) 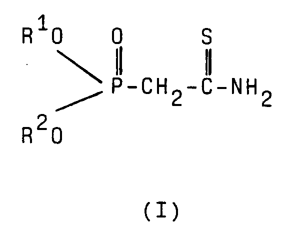 worin R¹ und R² für eine Alkylgruppe mit 1 bis 8, vorzugsweise 1 bis 4 Kohlenstoffatomen stehen, wobei R¹ und R² gleich oder verschieden sein oder gemeinsam einen Ring bilden können, dadurch gekennzeichnet, daß man Cyanmethanphosphonsäurediester der allgemeinen Formel (II) 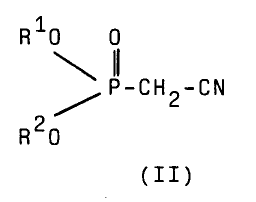 worin R¹ und R² die obengenannte Bedeutung haben, mit Schwefelwasserstoff bei Temperaturen von 0 bis 130 °C in Gegenwart von 0,5 bis 5 Mol je Mol der Verbindung gemäß der allgemeinen Formel (II) eines tertiären Amins nach der allgemeinen Formel (III) 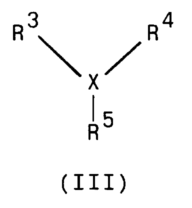 worin R³, R⁴ und R⁵ für jeweils gleiche oder verschiedene geradkettige oder verzweigte Alkylgruppen mit 1 bis 4 Kohlenstoffatomen stehen, wobei R³, R⁴ und R⁵ zusammen mindestens 5 und höchstens 10 Kohlenstoffatome aufweisen, umsetzt.

2. Verfahren nach Anspruch 1, dadurch gekennzeichnet, daß man als zusätzlichen Katalysator eine Verbindung der allgemeinen Formel (IV) 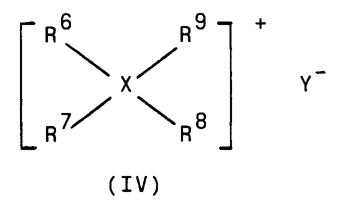 worin R⁶, R⁷, R⁸ und R⁹ für jeweils eine gleiche oder verschiedene Alkyl-, Benzyl- oder Aralkylgruppe mit 1 bis 20 Kohlenstoffatomen stehen und worin X ein Stickstoff- oder Phosphoratom und Y ein Halogenid ist, verwendet.

3. Verfahren nach Anspruch 1 oder 2, dadurch gekennzeichnet, daß die Umsetzung bei Temperaturen von 10 bis 40 °C erfolgt.

4. Verfahren nach mindestens einem der Ansprüche 1 bis 3, dadurch gekennzeichnet, daß Cyanomethanphosphonsäurediester und Schwefelwasserstoff im Molverhältnis 1 : (1 bis 2), vorzugsweise 1 : (1,1 bis 1,5) umgesetzt werden.
